# EUROPEAN PATENT APPLICATION

(11) **EP 3 093 769 A1**
(43) Date of publication of application: **16.11.2016**
(21) Application number: 15735011.7
(22) Date of filing: 08.01.2015
(51) Int. Cl.: G06F 13/00, H04N 1/00

(54) **IMAGE PROCESSING SYSTEM, ELECTRONIC BLACKBOARD, AND PROGRAM**

(30) Priority: 10.01.2014 JP 2014002830
(71) Applicant: Ricoh Company, Ltd., Tokyo 143-8555 (JP)
(72) Inventor: TSUKUDA, Tomoyuki, Tokyo 143-8555 (JP); KASATANI, Kiyoshi, Tokyo 143-8555 (JP); KEMMOCHI, Eiji, Tokyo 143-8555 (JP); EMORI, Mototsugu, Tokyo 143-8555 (JP)
(74) Representative: Schwabe - Sandmair - Marx
(86) International application number: PCT/JP2015/050365
(87) International publication number: WO 2015/105143

(57) **Abstract**

An image processing system includes an electronic blackboard and an information processing apparatus connected to the electronic blackboard via a network. The electronic blackboard includes a processor and a storage part storing a program that, when executed by the processor, causes the electronic blackboard to generate a code including identification information of a request and identification information of data to be processed, the request and the data to be processed being specified on a display device of the electronic blackboard, and display the generated code on the display device. The information processing apparatus executes a process according to the type of the request identified by the identification information of the request included in information transmitted by the communication device, the information being extracted by the communication device from an image of the displayed code captured by the communication device.

## Description

### Technical Field

The present invention relates to image processing systems including a display device that displays images.

### Background Art

Electronic blackboards capable of causing an image to be displayed on a display device such as a display and displaying an image of characters, numbers, figures or the like drawn on the displayed image by a user have been used.

There is a demand for exchanging data between such electronic blackboards and a data server. As a technique for exchanging data between an electronic appliance and a server, Patent Document 1 discloses an operator system in which a setting page is transmitted from an electronic appliance to a server via a portable terminal.

### [Prior Art Document]

### [Patent Document]

[Patent Document 1] Japanese Unexamined Patent Application Publication No. 2013-92828

### Summary of Invention

### Problems to be Solved by the Invention

When the technique disclosed by Patent Document 1 is applied to the electronic blackboard, however, there is a problem in that it is not easy to download or upload data desired by a user because only predetermined data are transmitted from the electronic blackboard to the data server.

The present invention solves the above-described problem, and has an object of providing an image processing system, an electronic blackboard, and a program that make it possible to easily download and upload data desired by a user.

### Means for Solving the Problems

According to an aspect of the present invention, an image processing system includes an electronic blackboard and an information processing apparatus connected to the electronic blackboard via a network. The electronic blackboard includes a processor and a storage part storing a program that, when executed by the processor, causes the electronic blackboard to generate a code including identification information of a request and identification information of data to be processed, the request and the data to be processed being specified on a display device of the electronic blackboard, and display the generated code on the display device. The information processing apparatus executes a process according to the type of the request identified by the identification information of the request included in information transmitted by the communication device, the information being extracted by the communication device from an image of the displayed code captured by the communication device.

### Effects of the Invention

According to an aspect of the present invention, an image processing system makes it possible to easily download and upload data desired by a user.

### Brief Description of the Drawings

FIG. 1 is a diagram depicting an embodiment of an image processing system according to the present invention.
FIG. 2 is a diagram depicting a hardware configuration of an electronic blackboard.
FIG. 3 is a diagram depicting a hardware configuration of a portable terminal.
FIG. 4 is a diagram depicting a functional configuration of the electronic blackboard.
FIG. 5 is a diagram depicting a functional configuration of the portable terminal.
FIG. 6 is a diagram depicting a functional configuration of a data server.
FIG. 7 is a sequence diagram depicting an embodiment of a process executed by the image processing system.
FIG. 8 is a sequence diagram depicting another embodiment of a process executed by the image processing system.
FIG. 9 is a flowchart depicting an embodiment of a process executed by the electronic blackboard.
FIG. 10 is a flowchart depicting an embodiment of a process executed by the portable terminal.
FIG. 11 is a flowchart depicting an embodiment of a process that the data server executes when receiving data from the portable terminal.

### Mode for Carrying out the Invention

Embodiments of the present invention are described below with reference to the accompanying drawings. The present invention is not limited to the below-described embodiments.

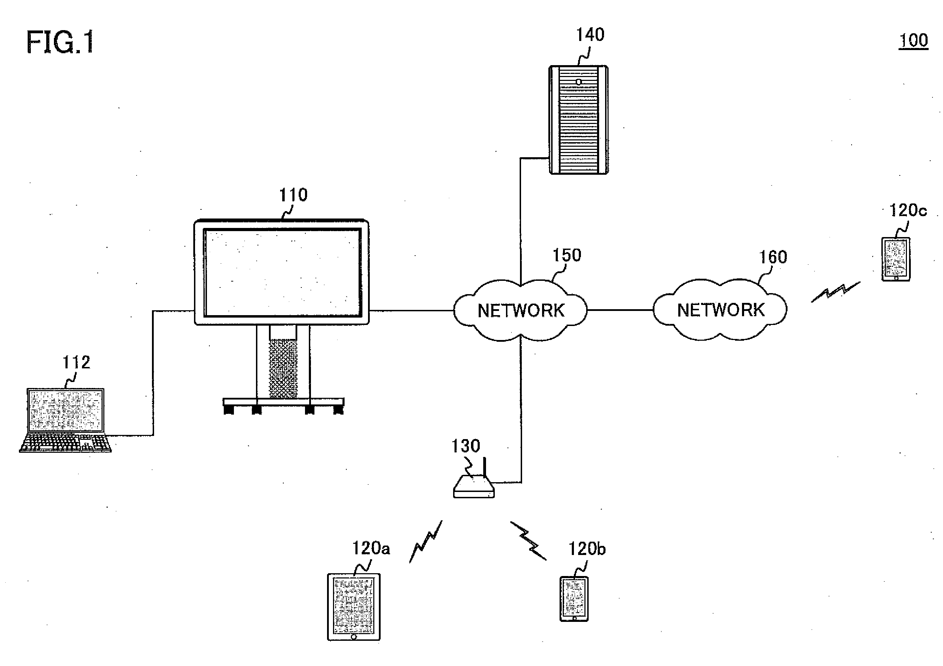

FIG. 1 is a diagram depicting an embodiment of an image processing system according to the present invention. Referring to FIG. 1, an image processing system 100 includes an electronic blackboard 110, portable terminals 120a, 120b, and 120c, an access point 130, and a data server 140. The electronic blackboard 110, the access point 130, and the data server 140 are connected to a network 150 including a network such as a LAN. The network 150 is connected to a network 160 that includes telephone lines and Internet connections.

The electronic blackboard 110 is an image processing apparatus capable of displaying an image provided by an image providing apparatus 112 and displaying an image drawn by a user. The electronic blackboard 110 executes a process according to a request specified by a user. The electronic blackboard 110 communicates with the data server 140 via the network 150.

The portable terminals 120a, 120b, and 120c are communication devices that capture an image displayed on the electronic blackboard 110, and transmit information obtained from the captured image to the data server 140. The portable terminals 120a and 120b transmit data to the access point 130 by radio communications so as to transmit the data to the data server 140 via the network 150. The portable terminal 120c transmits data to a base station (not depicted) by radio communications so as to transmit the data to the data server 140 via the networks 150 and 160.

According to the embodiment depicted in FIG. 1, while a tablet PC and smartphones are employed as examples of portable terminals, various types of portable communication devices may be employed.

The data server 140 is an information processing apparatus that executes a process according to a request specified by a user. In response to receiving requests from the portable terminals 120a, 120b, and 120c, the data server 140 executes processes such as downloading data and uploading data in accordance with the requests.

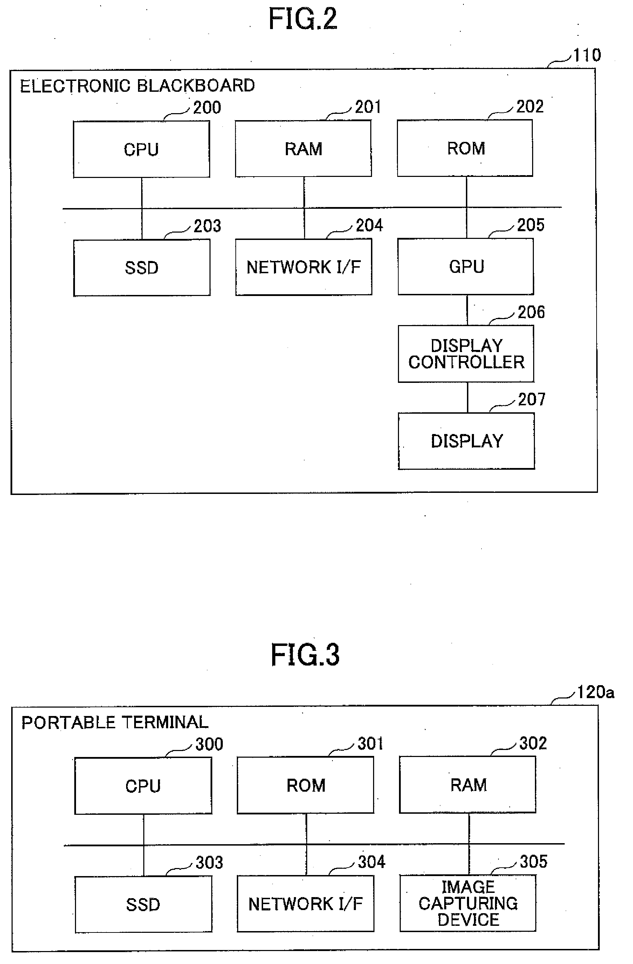

Specifically, when a request for downloading is specified, the data server 140 transmits data to be downloaded stored in a storage device of the data server 140 to the electronic blackboard 110. The transmitted (downloaded) data are displayed on a display 207 (FIG. 2) of the electronic blackboard 110, and it is possible to draw characters and figures on the downloaded data. Thus, it is possible to display not only an image provided by the image providing apparatus 112 but also data to be downloaded stored in the storage device of the data server 140 on the display 207 of the electronic blackboard 110. When a request for uploading is specified, the data server 140 transmits a request for uploading to the electronic blackboard 110, and stores data to be uploaded provided by the electronic blackboard 110 in the storage device of the data server 140. Here, the data to be uploaded include the data of the below-described composite image generated in the electronic blackboard 110.

FIG. 2 is a diagram depicting a hardware configuration of the electronic blackboard 110. A hardware configuration of the electronic blackboard 110 is described below with reference to FIG. 2.

The electronic blackboard 110 includes a CPU 200, a RAM 201, a ROM 202, a solid state drive (SSD) 203, a network interface (I/F) 204, a graphics processing unit (GPU) 205, a display controller 206, and the display 207.

The CPU 200 is a processor that executes various programs. The RAM 201 is a volatile storage device that provides an execution space for programs executed by the electronic blackboard 110. The ROM 202 is a nonvolatile storage device that stores various data. The SSD 203 is a storage device capable of continuously storing various data such as a program according to an embodiment of the present invention. Under the control of various OSs, the CPU 200 reads a program according to an embodiment of the present invention from the SSD 203, loads the program into the RAM 201, and executes the program, so as to implement the below-described functions on the electronic blackboard 110.

The network I/F 204 is an interface that enables wired data communications and radio data communications. The GPU 205 is a processor that executes image processing, and processes images displayed on the display 207. The display controller 206 controls the display 207 under the control of the GPU 205.

FIG. 3 is a diagram depicting a hardware configuration of the portable terminal 120a. A hardware configuration of the portable terminal 120a is described below with reference to FIG. 3. A description of hardware configurations of the portable terminals 120b and 120c is omitted because the portable terminals 120b and 120c have the same hardware configuration as the portable terminal 120a. Furthermore, the data server 140 has the same hardware configuration as the portable terminal 120a except that the data server 140 includes a large-capacity storage device such as an HDD in place of an SSD 303 and that the data server 140 does not include an image capturing device 305.

The portable terminal 120a includes a CPU 300, a ROM 301, a RAM 302, the SSD 303, a network I/F 304, and the image capturing device 305.

The CPU 300 is a processor that executes various programs. The ROM 301 is a nonvolatile storage device that stores various data. The RAM 302 is a volatile storage device that provides an execution space for programs executed by the portable terminal 120a. The SSD 303 is a storage device capable of continuously storing various data such as a program according to an embodiment of the present invention. The network I/F 304 is an interface that enables radio data communications. The image capturing device 305 includes an image capturing element such as a CCD.

Under the control of various OSs, the CPU 300 reads a program according to an embodiment of the present invention from the SSD 303, loads the program into the RAM 302, and executes the program, so as to implement the below-described functions on the portable terminal 120a.

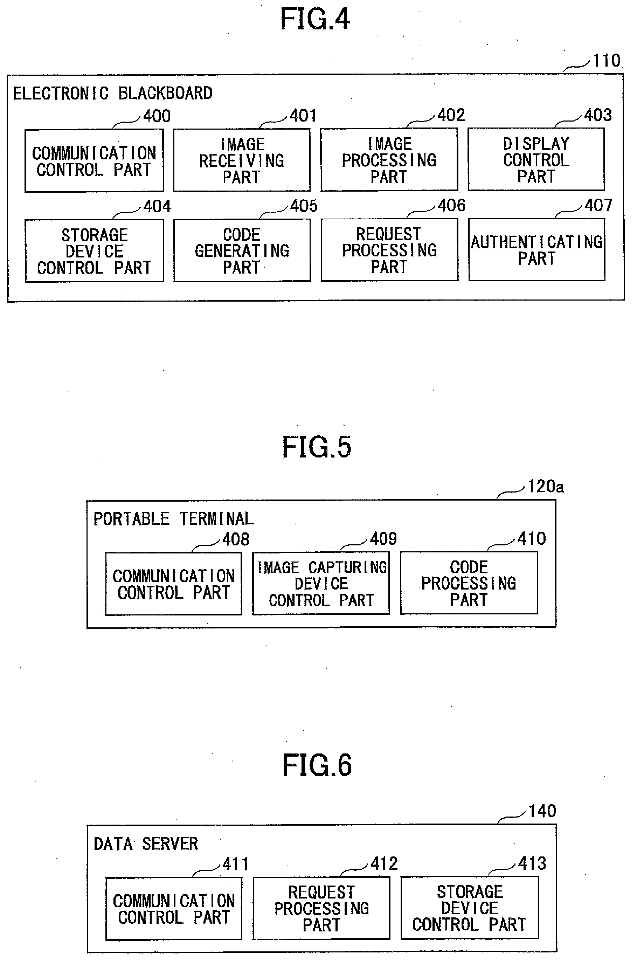

FIG. 4 is a diagram depicting a functional configuration of the electronic blackboard 110. A functional configuration of the electronic blackboard 110 is described below with reference to FIG. 4.

The electronic blackboard 110 includes a communication control part 400, an image receiving part 401, an image processing part 402, a display control part 403, a storage device control part 404, a code generating part 405, a request processing part 406, and an authenticating part 407.

The communication control part 400 controls communications of the electronic blackboard 110. The image receiving part 401 receives images provided by the image providing apparatus 112. In response to receiving an image from the image providing apparatus 112, the image receiving part 401 passes the image to the image processing part 402.

The image processing part 402 processes an image displayed on a display device serving as the display 207. The image processing part 402 passes the image provided by the image providing apparatus 112 to the display control part 403 and causes the image to be displayed on the display 207. Furthermore, the image processing part 402 generates a drawn image in accordance with a user's drawing operation on the display 207, combines the drawn image and the image provided by the image providing apparatus 112 into a composite image to pass the composite image to the display control part 403, and causes the composite image to be displayed on the display 207.

The display control part 403 controls the display 207. The display control part 403 is implemented in the display controller 206. The display control part 403 displays, on the display 207, a GUI that enables a user to specify downloading, uploading, data to be downloaded, and data to be uploaded, and images provided by the image processing part 402. The storage device control part 404 controls a storage device of the electronic blackboard 110.

The code generating part 405 generates a code that causes the image processing system 100 to execute a process specified by a user. When a user uses a GUI displayed on the display 207 of the electronic blackboard 110 to give an instruction to display a code, the code generating part 405 generates a code such as a one-dimensional code or a two-dimensional code and causes the display control part 403 to display the code on the display 207.

In addition to the identification information of a request specified by a user and the identification information of data to be downloaded or data to be uploaded specified by a user, request transmission destination information and a password are embedded in the code generated by the code generating part 405.

The identification information of a request is the identification information of a request to the image processing system 100. A user uses a GUI displayed on the display 207 to specify the identification information of a request. According to this embodiment, the identification information of a request indicates a request such as a request for uploading data from the electronic blackboard 110 to the data server 140 or a request for downloading data from the data server 140 to the electronic blackboard 110.

The identification information of data to be downloaded is the identification information of data to be downloaded stored in the data server 140. A user uses a GUI displayed on the display 207 to specify the identification information of data to be downloaded.

The identification information of data to be uploaded is the identification information of data to be uploaded retained by the electronic blackboard 110. A user uses a GUI displayed on the display 207 to specify the identification information of data to be uploaded.

The request transmission destination information is information indicating the transmission destination of a request from the data server 140 to the electronic blackboard 110. According to this embodiment, the URL of the electronic blackboard 110 is used as the request transmission destination information.

The password is information for authenticating a request to the electronic blackboard 110. According to this embodiment, the password includes a character string such as a globally unique identifier (GUID).

In response to generation of a password, the code generating part 405 causes the storage device control part 404 to store the password and the expiration date of the password in correlation with each other in the storage device of the electronic blackboard 110. The code generating part 405 may set a desired expiration date.

The request processing part 406 processes a request transmitted by the data server 140. In response to receiving a request from the data server 140, the request processing part 406 causes the authenticating part 407 to perform authentication with a password attached to the request. When the authentication with the password succeeds, the request processing part 406 executes a process according to the type of the request.

The authenticating part 407 performs authentication with a password received together with a request to the electronic blackboard 110. The authenticating part 407 performs authentication with the password transmitted by the data server 140, referring to a storage device in which passwords and expiration dates are stored to determine whether the password is stored in the storage device.

FIG. 5 is a diagram depicting a functional configuration of the portable terminal 120a. A functional configuration of the portable terminal 120a is described below with reference to FIG. 5.

The portable terminal 120a includes a communication control part 408, an image capturing device control part 409, and a code processing part 410. The communication control part 408 controls communications of the portable terminal 120a.

The image capturing device control part 409 controls the image capturing device 305. The image capturing device control part 409 causes the image capturing device 305 to capture an image of a code displayed on the display 207 of the electronic blackboard 110 in response to a user's instruction, so as to generate a captured image.

The code processing part 410 processes a code included in the captured image generated by the image capturing device control part 409. The code processing part 410 identifies a code included in the captured image, extracts information embedded in the code, and causes the communication control part 408 to transmit the extracted information to the data server 140.

FIG. 6 is a diagram depicting a functional configuration of the data server 140. A functional configuration of the data server 140 is described below with reference to FIG. 6.

The data server 140 includes a communication control part 411, a request processing part 412, and a storage device control part 413.

The communication control part 411 controls communications of the data server 140. In response to receiving data from the portable terminal 120a, 120b, or 120c, the communication control part 411 passes the received data to the request processing part 412.

The request processing part 412 processes requests transmitted by the portable terminals 120a, 120b, and 120c. In response to receiving data from the portable terminal 120a, 120b, or 120c, the request processing part 412 analyzes the received data, and executes a process according to the type of the request.

The storage device control part 413 controls the storage device of the data server 140 in accordance with an instruction of the request processing part 412.

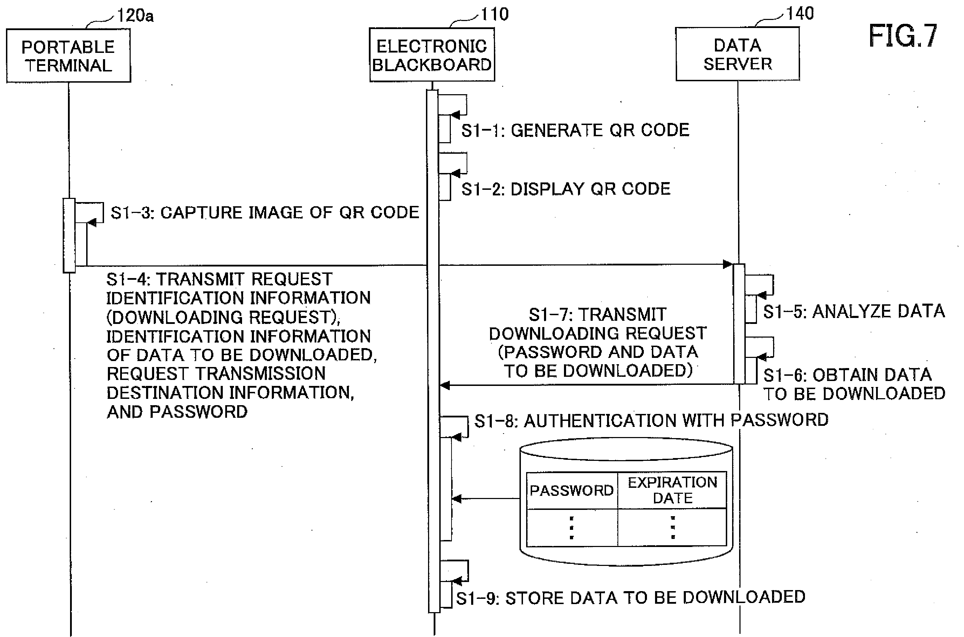

FIG. 7 is a sequence diagram depicting an embodiment of a process executed by the image processing system 100. A process executed when a user gives an instruction to download desired data from the data server 140 is described below with reference to FIG. 7.

Referring to FIG. 7, at step S1-1, in response to a user's instruction, the code generating part 405 of the electronic blackboard 110 generates a QR code (registered trademark) as a code image that causes data desired by the user to be downloaded. At step S1-2, the code generating part 405 causes the display control part 403 to display this QR code (registered trademark) on the display 207 of the electronic blackboard 110. According to this embodiment, the electronic blackboard 110 generates a QR code (registered trademark) in which the identification information of a request that indicates a request for downloading, the identification information of data to be downloaded, request transmission destination information, a password, etc., are embedded as code information.

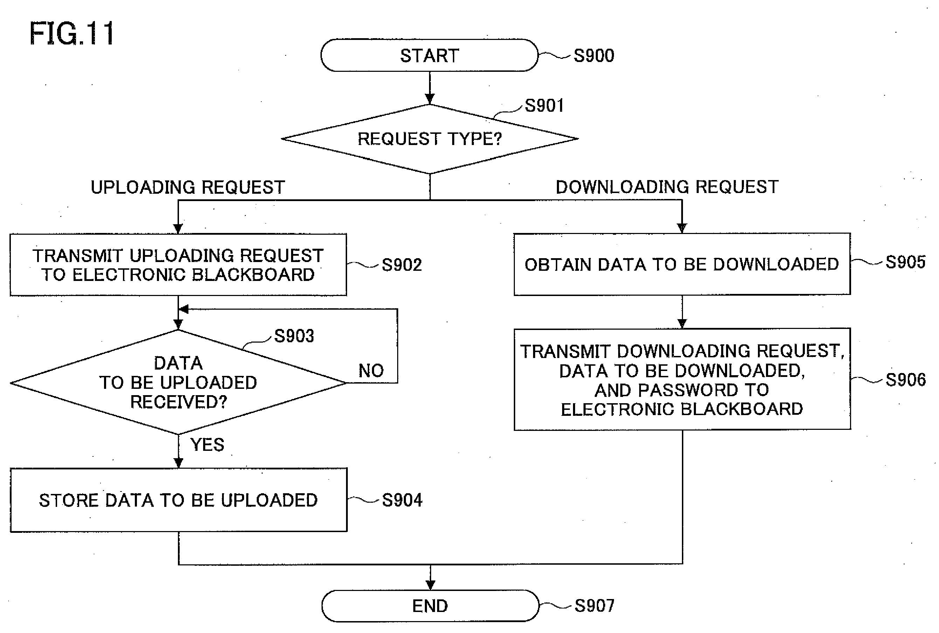

Next, at step S1-3, the user uses the portable terminal 120a to capture an image of the QR code (registered trademark) displayed on the display 207 of the electronic blackboard 110. Specifically, the image capturing device control part 409 of the portable terminal 120a causes the image capturing device 305 to capture an image of the QR code (registered trademark), so as to generate a captured image. Next, the code processing part 410 of the portable terminal 120a processes the code included in the captured image. Specifically, the code processing part 410 extracts the code information such as the identification information of a request that indicates a request for downloading, the identification information of data to be downloaded, request transmission destination information, and a password from the QR code (registered trademark) included in the captured image. At step S1-4, the code processing part 410 causes the communication control part 408 to transmit these extracted data to the data server 140. The details of the capturing of the image of the QR code (registered trademark) are described below with reference to FIG. 11.

The communication control part 411 of the data server 140 receives data transmitted from the portable terminal 120a. At step S1-5, the request processing part 412 analyzes the data. At step S1-6, the request processing part 412 obtains the identification information of a request that indicates a request for downloading, the identification information of data to be downloaded, etc., and executes a process according to the type of the request indicated by the identification information of a request. According to this embodiment, the request processing part 412 obtains data identified by the identification information of data to be downloaded, and at step S1-7, causes the communication control part 411 to transmit the obtained data and the password along with a request for downloading to the electronic blackboard 110 indicated by the request transmission destination information.

When the electronic blackboard 110 receives the request for downloading from the data server 140, at step S1-8, the request processing part 406 causes the authentication part 407 to perform authentication with the password attached to the request for downloading. In response to successful authentication with the password, at step S1-9, the request processing part 406 stores the data to be downloaded transmitted by the data server 140 in the storage device.

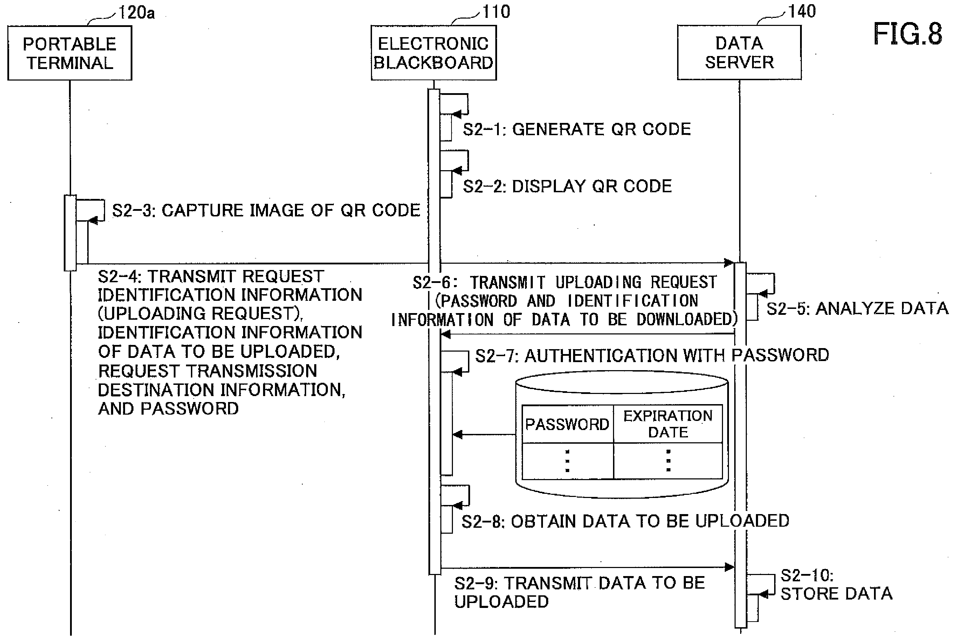

FIG. 8 is a sequence diagram depicting another embodiment of a process executed by the image processing system 100. A process executed when a user gives an instruction to upload desired data is described below with reference to FIG. 8.

Referring to FIG. 8, at step S2-1, in response to a user's instruction, the code generating part 405 of the electronic blackboard 110 generates a QR code (registered trademark) that causes data desired by the user to be uploaded. At step S2-2, the code generating part 405 causes the display control part 403 to display this QR code (registered trademark) on the display 207 of the electronic blackboard 110. According to this embodiment, the electronic blackboard 110 generates a QR code (registered trademark) in which the identification information of a request that indicates a request for uploading, the identification information of data to be uploaded, request transmission destination information, a password, etc., are embedded as code information.

Next, at step S2-3, the user uses the portable terminal 120a to capture an image of the QR code (registered trademark) displayed on the display 207 of the electronic blackboard 110. Specifically, the image capturing device control part 409 of the portable terminal 120a causes the image capturing device 305 to capture an image of the QR code (registered trademark), so as to generate a captured image. Next, the code processing part 410 of the portable terminal 120a processes the code included in the captured image. Specifically, the code processing part 410 extracts the code information such as the identification information of a request that indicates a request for uploading, the identification information of data to be uploaded, request transmission destination information, and a password from the QR code (registered trademark) included in the captured image. At step S2-4, the code processing part 410 causes the communication control part 408 to transmit these extracted data to the data server 140. The details of the capturing of the image of the QR code (registered trademark) are described below with reference to FIG. 11.

The communication control part 411 of the data server 140 receives data transmitted from the portable terminal 120a. At step S2-5, the request processing part 412 analyzes the data. The request processing part 412 obtains the identification information of a request that indicates a request for uploading, the identification information of data to be uploaded, etc., and executes a process according to the type of the request indicated by the identification information of a request. According to this embodiment, at step S2-6, the request processing part 412 causes the communication control part 411 to transmit the identification information of data to be uploaded and the password along with a request for uploading to the electronic blackboard 110 indicated by the request transmission destination information.

When the electronic blackboard 110 receives the request for uploading from the data server 140, at step S2-7, the request processing part 406 causes the authenticating part 407 to perform authentication with the password attached to the request for uploading. In response to successful authentication with the password, at step S2-8, the request processing part 406 obtains the identification information of data to be uploaded, and obtains data identified by the identification information of data to be uploaded. At step S2-9, the request processing part 406 causes the communication control part 400 to transmit the obtained data to be uploaded to the data server 140. At step S2-10, the data server 140 stores the data to be uploaded transmitted by the electronic blackboard 110 in the storage device.

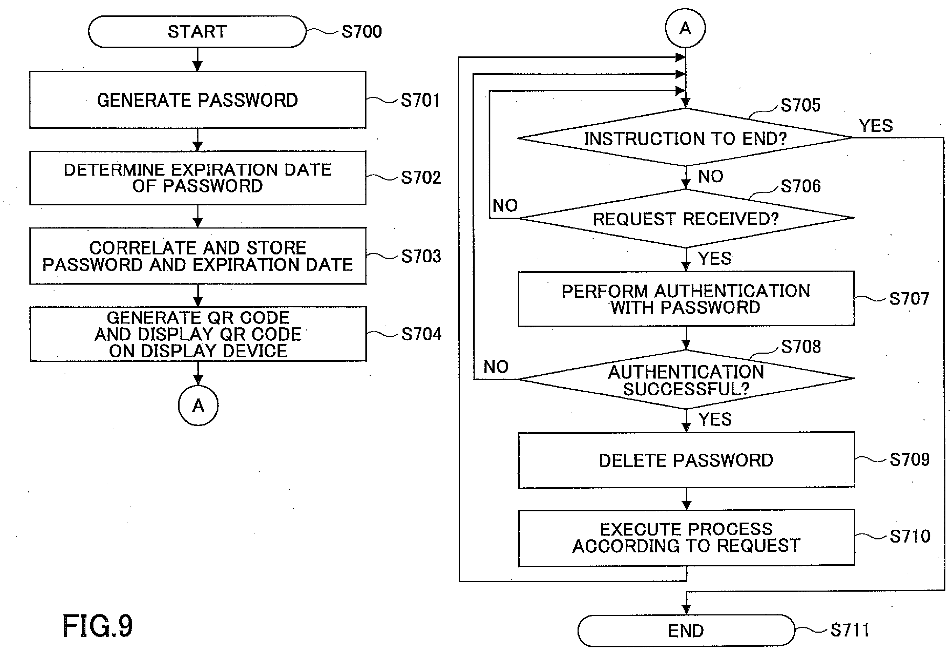

FIG. 9 is a flowchart depicting an embodiment of a process executed by the electronic blackboard 110. A process executed by the electronic blackboard 110 when a user gives an instruction to download desired data from the data server 140 or upload desired data to the data server 140 is described below with reference to FIG. 9.

The process of FIG. 9 starts at step S700 in response to a user's instruction to generate and display a code to the electronic blackboard 110. At step S701, the code generating part 405 of the electronic blackboard 110 generates a password. At step S702, the code generating part 405 determines the expiration date of the password.

At step S703, the code generating part 405 correlates and stores the password and the expiration date in the storage device. At step S704, the code generating part 405 generates a QR code (registered trademark) and the display control part 403 displays the QR code (registered trademark) on the display 207 of the electronic blackboard 110. According to this embodiment, the code generating part 405 generates a QR code (registered trademark).

At step S705, the code generating part 405 determines whether an instruction to end the process depicted in FIG. 9 is received. According to this embodiment, when an END button displayed on the display 207 is depressed, the electronic blackboard 110 determines that an instruction to end the process is received. If an instruction to end the process is received (YES at step S705), the process ends at step S711. On the other hand, if no instruction to end the process is received (NO at step S705), the process proceeds to step S706.

At step S706, the request processing part 406 determines whether a request is received from the data server 140. If no request is received from the data server (NO at step S706), the process returns to step S705. On the other hand, if a request is received from the data server 140 (YES at step S706), the process proceeds to step S707.

At step S707, the authenticating part 407 performs authentication with a password transmitted by the data server 140, and at step S708, determines whether the authentication is successful. To be more specific, the authenticating part 407 refers to the storage device in which passwords and expiration dates are stored in correlation with each other, and determines whether the password transmitted by the data server 140 is stored in the storage device. If the password is not stored in the storage device, the authenticating part 407 determines that the authentication has failed (NO at step S708), and the process returns to step S705.

On the other hand, if the password is stored in the storage part, the authenticating part 407 further determines whether the expiration date correlated with the password has passed. If the expiration date has passed, the authenticating part 407 determines that the authentication has failed (NO at step S708), and the process returns to step S705. On the other hand, if the expiration date has not passed, the authenticating part 407 determines that the authentication is successful (YES at step S708), and the process proceeds to step S709.

At step S709, the authenticating part 407 deletes the password with which the authentication has succeeded from the storage device. That is, the password according to this embodiment functions as a one-time password that is valid for only one time. At step S710, the request processing part 406 executes a process according to the request transmitted by the data server 140, and the process returns to step S705.

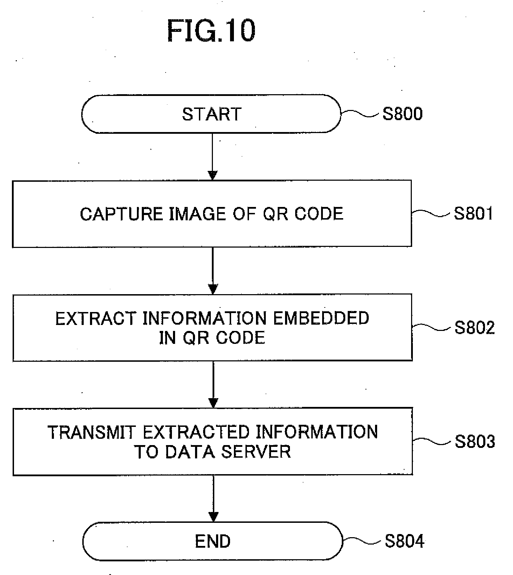

FIG. 10 is a flowchart depicting an embodiment of a process executed by the portable terminals 120a, 120b, and 120c. A process executed by the portable terminal 120a when a user instructs the portable terminal 120a to read a code is described below with reference to FIG. 10. Specifically, this process corresponds to steps S1-3 and S1-4 of FIG. 7 and steps S2-3 and S2-4 of FIG. 8.

The process of FIG. 10 starts at step S800. At step S801, the image capturing device control part 409 of the portable terminal 120a controls the image capturing device 305 to cause the image capturing device 305 to capture an image of a QR code (registered trademark) displayed on the display 207 of the electronic blackboard 110. At step S802, the code processing part 410 identifies the QR code (registered trademark) from the captured image, and extracts information embedded in the QR code (registered trademark). At step S803, the communication control part 408 transmits the extracted information to the data server 140, and at step S804, the process ends.

FIG. 11 is a flowchart depicting an embodiment of a process that the data server 140 executes when receiving data from the portable terminal 120a, 120b, or 120c. A process executed by the data server 140 when receiving data from the portable terminal 120a is described below with reference to FIG. 11.

The process of FIG. 11 starts at step S900. At step S901, the request processing part 412 of the data server 140 analyzes data received from the portable terminal 120a, and uses the identification information of a request included in the received data to determine the type of a request.

If the identification information of a request indicates a request for uploading, the process proceeds to step S902. At step S902, the request processing part 412 uses the communication control part 411 to transmit a password and the identification information of data to be uploaded included in the received data, along with a request for uploading, to the electronic blackboard 110 identified by request transmission destination information included in the received data.

At step S903, the request processing part 412 determines whether data to be uploaded are received from the electronic blackboard 110. If data to be uploaded are not received (NO at step S903), the process of step S903 is repeated. If data to be uploaded are received (YES at step S903), the process proceeds to step S904. At step S904, the request processing part 412 uses the storage device control part 413 to store the data to be uploaded in the storage device, and at step S907, the process ends.

If it is determined at step S901 that the identification information of a request indicates a request for downloading, the process proceeds to step S905.

At step S905, the data sever 140 obtains data identified by the identification information of data to be downloaded included in the received data from the storage device. At step S906, the data server 140 transmits the data to be downloaded and a password included in the received data, along with a request for downloading, to the electronic blackboard 110 identified by request transmission destination information included in the received data, and at step S907, the process ends.

All examples and conditional language provided herein are intended for pedagogical purposes of aiding the reader in understanding the invention and the concepts contributed by the inventors to further the art, and are not to be construed as limitations to such specifically recited examples and conditions, nor does the organization of such examples in the specification relate to a showing of the superiority or inferiority of the invention. An image processing system, an electronic blackboard, and a program have been described in detail based on one or more embodiments of the present invention. It should be understood, however, that the various changes, substitutions, and alterations could be made hereto without departing from the spirit and scope of the present invention.

The present application is based upon and claims the benefit of priority of Japanese Patent Application No. 2014-002830, filed on January 10, 2014, the entire contents of which are incorporated herein by reference.

### Description of the Reference Numeral

- 100: image processing system

- 110: electronic blackboard
- 112: image providing apparatus
- 120a, 120b, 120c: portable terminal
- 130: access point
- 140: data server
- 150: network
- 160: network

## Claims

1. An information processing system comprising:
an electronic blackboard; and
an information processing apparatus connected to the electronic blackboard via a network,
the electronic blackboard including:
a processor; and
a storage part storing a program that, when executed by the processor, causes the electronic blackboard to
generate a code including identification information of a request and identification information of data to be processed, the request and the data to be processed being specified on a display device of the electronic blackboard; and
display the generated code on the display device, and
the information processing apparatus being configured to execute a process according to a type of the request identified by the identification information of the request included in information transmitted by the communication device, the information being extracted by the communication device from an image of the displayed code captured by the communication device.

2. The image processing system according to claim 1,
wherein the information processing apparatus is configured to transmit an uploading request for data identified by the identification information of data to be processed to the electronic blackboard when the identification information of the request indicates the uploading request, and
wherein the information processing apparatus is configured to transmit a downloading request and data identified by the identification information of the data to be processed to the electronic blackboard when the identification information of the request indicates the downloading request.

3. The image processing system according to claim 2,
wherein the electronic blackboard is caused to transmit the data identified by the identification information of data to be processed to the information processing apparatus in response to receiving the uploading request from the information processing apparatus, and
wherein the electronic blackboard is caused to store the data identified by the identification information of the data to be processed in a storage device of the electronic blackboard in response to receiving the downloading request and the data identified by the identification information of the data to be processed.

4. The image processing system according to claim 2,
wherein the code includes a password,
wherein the information processing apparatus is configured to transmit the password along with the uploading or downloading request to the electronic blackboard, and
wherein the electronic blackboard is caused to execute a process according to the request received from the information processing apparatus when authentication of the request using the password succeeds.

5. The image processing system according to claim 4, wherein the password has an expiration date.

6. The image processing system according to claim 4, wherein the password is valid for only one time.

7. An electronic blackboard comprising:
a processor; and
a storage part storing a program that, when executed by the processor, causes the electronic blackboard to
display a code including identification information of a request and identification information of data to be processed on a display device of the electronic blackboard, the request and the data to be processed being specified on the display device; and
execute a process according to a request received from an information processing apparatus, the received request being based on information received from a communication device, the information being extracted by the communication device from an image of the displayed code captured by the communication device.

8. The electronic blackboard according to claim 7, wherein when the request received from the information processing apparatus is an uploading request, the electronic blackboard is caused to transmit a composite image generated by the electronic blackboard to the information processing apparatus as data to be uploaded.

9. The electronic blackboard according to claim 7, wherein when the request received from the information processing apparatus is a downloading request, and data to be downloaded are received with the downloading request, the electronic blackboard is caused to store the received data to be downloaded in a storage device of the electronic blackboard.

10. The electronic blackboard according to claim 7,
wherein the code includes a password,
wherein the information processing apparatus transmits the password along with the request to the electronic blackboard, and
wherein the electronic blackboard is caused to execute the process according to the request when authentication of the request using the password succeeds.

11. A computer-executable program executed by an electronic blackboard, the program causing the electronic blackboard to
display a code including identification information of a request and identification information of data to be processed on a display device of the electronic blackboard, the request and the data to be processed being specified on the display device; and
execute a process according to a request received from an information processing apparatus, the received request being based on information received from a communication device, the information being extracted by the communication device from an image of the displayed code captured by the communication device.
